# EUROPÄISCHE PATENTSCHRIFT

(11) **EP 3 756 927 B1**
(45) Veröffentlichungstag und Bekanntmachung des Hinweises auf die Patenterteilung: **24.11.2021**
(21) Anmeldenummer: 20164688.2
(22) Anmeldetag: 20.03.2020
(51) Int. Cl.: B60K 37/06

(54) **RAHMEN EINES KOMBIINSTRUMENTS EINES KRAFTFAHRZEUGS UND KOMBIINSTRUMENT MIT EINEM SOLCHEN RAHMEN**
FRAME OF A COMBINATION INSTRUMENT OF A MOTOR VEHICLE AND COMBINATION INSTRUMENT WITH SUCH A FRAME
CADRE D'UN INSTRUMENT COMBINÉ D'UN VÉHICULE AUTOMOBILE ET INSTRUMENT COMBINÉ DOTÉ D'UN TEL CADRE

(30) Priorität: 27.06.2019 DE 102019117362
(43) Veröffentlichungstag der Anmeldung: 30.12.2020
(73) Patentinhaber: Marelli Stuttgart (Germany) GmbH, 70563 Stuttgart (DE)
(72) Erfinder: MISHRA, Navaneetham, 70563 Stuttgart (DE); GAMMOUNE, Mohamed, 70563 Stuttgart (DE); GIUSTI, Ruggero, 70563 Stuttgart (DE)
(74) Vertreter: Wörz, Volker Alfred

(56) Entgegenhaltungen:
- EP-A2- 1 013 496
- US-A1- 2012 049 561

## Beschreibung

Die vorliegende Erfindung betrifft einen Rahmen eines Kombiinstruments eines Kraftfahrzeugs. Das Kombiinstrument umfasst den Rahmen und eine daran elastisch befestigte elektrische Leiterplatte zur elektrischen Kontaktierung einer Leuchte, eines Bildschirms und/oder eines Elektromotors. Ferner betrifft die Erfindung ein Kombiinstrument eines Kraftfahrzeugs mit einem solchen Rahmen.

Das Kombiinstrument ist zur Montage im Inneren des Kraftfahrzeugs im Sichtbereich des Fahrers im Armaturenbrett vorgesehen. Das Kraftfahrzeug kann ein Auto, ein Lastkraftwagen oder ein Zweirad sein. Ferner könnte das Kraftfahrzeug auch ein Schienenfahrzeug oder ein Flugzeug sein. Das Kombiinstrument umfasst mindestens eine analoge oder digitale Anzeigeeinrichtung zur Anzeige von betriebs- und/oder verkehrsbezogenen Informationen betreffend das Kraftfahrzeug bzw. sein Umfeld. Ferner umfasst das Kombiinstrument mehrere neben- oder übereinander angeordnete Kontrollleuchten. Derartige Kombiinstrumente sind in unterschiedlichen Ausführungsformen aus dem Stand der Technik bekannt. Während früher hauptsächlich analoge Anzeigeeinrichtungen mit einem elektrischen Zeigerinstrument Verwendung fanden, das mindestens einen durch einen Elektromotor angetriebenen Zeiger umfasst, werden in neuerer Zeit zunehmend digitale Anzeigeeinrichtungen eingesetzt, die mindestens einen Bildschirm aufweisen, auf dem ein Bild eines analogen Zeigerinstruments und/oder eine digitale Anzeige darstellbar ist.

Das Kombiinstrument umfasst üblicherweise ein Gehäuse aus Kunststoff, das mehrere unterschiedlich große Öffnungen und Sichtfenster aufweist, in denen verschiedene Anzeigen (z.B. Geschwindigkeitsanzeige, Drehzahlanzeige, Kraftstofffüllstandsanzeige, Motortemperaturanzeige, Ladedruckanzeige, etc.) in Form von analogen oder digitalen Anzeigeeirichtungen sowie verschiedene Kontrollleuchten (z.B. für den Zustand der Beleuchtungseinrichtung, für den Zustand des Motors, für den Zustand des Fahrwerks, für den Zustand der Karosserie, etc.) oder Bildschirme (z.B. für Navigation, als virtuelle Anzeigen, als virtuelle Kontrollleuchten, etc.) angeordnet sein können. Die Öffnungen und/oder Sichtfenster des Gehäuses sind durch eine oder mehrere transparente Abdeckscheiben aus Glas oder Kunststoff verschlossen, um die Anzeigen, Kontrollleuchten oder Bildschirme vor mechanischen Einflüssen, Schmutz, Staub und Feuchtigkeit zu schützen.

Im Stand der Technik ist an dem Rahmen mittels Schrauben oder anderer Befestigungselemente und separater elastisch federnder Dämpfungselemente, bspw. in Form Gummi- oder Kunststoffringen, eine Leiterplatte befestigt, an der wiederum Kontrollleuchten, Bildschirme und/oder Elektromotoren zum Verstellen der Zeiger von analogen Anzeigeeirichtungen elektrisch kontaktiert sein können. Der Rahmen mit der daran befestigten Leiterplatte wird in das Gehäuse des Kombiinstruments eingesetzt, so dass die auf der Leiterplatte kontaktierten elektrischen Bauteile bzw. die entsprechenden Anzeigeeinrichtungen in den Öffnungen bzw. Sichtfenstern des Gehäuses angeordnet sind. Die Dämpfungselemente zur federnd elastischen Lagerung der Leiterplatte dienen dazu, Vibrationen der Karosserie, die auf das Gehäuse des Kombiinstruments übertragen werden, von den empfindlichen elektrischen Bauteilen fernzuhalten und um Fertigungstoleranzen auszugleichen, damit die an der Leiterplatte befestigten Kontrollleuchten, analogen oder digitalen Anzeigeeinrichtungen und/oder Bildschirme an den dafür vorgesehenen Positionen (z.B. in die Öffnungen im Bereich der Sichtfenster) im Kombiinstrument ohne größere Spannungen montiert werden können.

Nachteilig an dem Stand der Technik ist es, dass durch die elastisch federnde Befestigung der Leiterplatte an dem Rahmen des Kombiinstruments eine Vielzahl von separaten Teilen vorgehalten und montiert werden muss. Dies ist aufwendig und teuer. Zudem birgt dies die Gefahr einer Fehlmontage.

Das Dokument US 2012/049561 A1 offenbart ebenfalls einen Rahmen eines Kombiintruments.

Ausgehend von dem beschriebenen Stand der Technik liegt der vorliegenden Erfindung die Aufgabe zugrunde, die Montage der Leiterplatte an dem Rahmen bzw. des gesamten Kombiinstruments zu vereinfachen und kostengünstiger und zuverlässiger zu gestalten.

Zur Lösung dieser Aufgabe wird ausgehend von dem Rahmen der eingangs genannten Art vorgeschlagen, dass der Rahmen ein damit einteilig ausgebildetes Trägerelement zur Befestigung der Leiterplatte und mindestens ein mit dem Rahmen einteilig ausgebildetes in mindestens einer Ebene elastisch federndes Halteelement aufweist, welches den Rahmen und das Trägerelement miteinander verbindet. Erfindungsgemäß wird also vorgeschlagen, dass die Halteelemente integraler Bestandteil des Rahmens sind. Die Halteelemente verbinden den Rahmen mit dem Trägerelement, das zur Befestigung der Leiterplatte vorgesehen ist. Das Trägerelement definiert über mindestens drei Auflagepunkte eine Auflagefläche, auf der die Leiterplatte befestigt wird. Die Befestigung der Leiterplatte an dem Trägerelement kann mittels Schrauben, Kleben, einer Rastverbindung oder auf sonstige Weise erfolgen. Die Leiterplatte ist vorzugsweise starr an dem Trägerelement befestigt. Die Halteelemente sind in mindestens einer Ebene elastisch federnd ausgestaltet. Die Ebene kann parallel zur der Auflagefläche des Trägerelements und/oder senkrecht dazu verlaufen.

Dank der elastisch federnden Halteelemente ist die Leiterplatte bezüglich des Rahmens in mindestens einer Ebene federnd elastisch gelagert. Dadurch können Vibrationen der Karosserie von den empfindlichen elektrischen Bauteilen, die auf der Leiterplatte befestigt und/oder elektrisch kontaktiert sind, ferngehalten und Fertigungstoleranzen ausgeglichen werden, damit die an der Leiterplatte befestigten Kontrollleuchten, analogen oder digitalen Anzeigeeinrichtungen und/oder Bildschirme an den dafür vorgesehenen Positionen (z.B. in Öffnungen im Bereich von Sichtfenstern eines Kombiinstruments) ohne größere Spannungen in dem Kombiinstrument montiert werden können.

Gemäß einer vorteilhaften Weiterbildung der Erfindung wird vorgeschlagen, dass die mindestens eine Ebene, in der das mindestens eine Halteelement elastisch federnd ist, parallel zu einer Flächenerstreckung des Rahmens verläuft. Die Flächenerstreckung des Rahmens verläuft vorzugsweise parallel zu der Auflagefläche des Trägerelements. Auf diese Weise kann die Leiterplatte bezüglich des Rahmens in einer xy-Ebene elastisch federn. Dies entspricht bei einem Blick auf das im Kraftfahrzeug montierte Kombiinstrument einer Bewegung nach rechts/links und oben/unten.

Gemäß einer bevorzugten Weiterbildung der Erfindung wird alternativ oder zusätzlich vorgeschlagen, dass die mindestens eine Ebene, in der das mindestens eine Halteelement elastisch federnd ist, senkrecht zu einer Flächenerstreckung des Rahmens verläuft. Vorzugsweise ist das mindestens eine Halteelement in zwei Ebenen, die senkrecht zueinander verlaufen, elastisch federnd ausgebildet. Auf diese Weise kann die Leiterplatte bezüglich des Rahmens auch in einer Richtung senkrecht zur xy-Ebene elastisch federn. Dies entspricht bei einem Blick auf das im Kraftfahrzeug montierte Kombiinstrument einer Bewegung auf den Betrachter zu oder von ihm weg. Mit einer entsprechenden Ausgestaltung der Halteelemente kann die Leiterplatte somit im dreidimensionalen Raum elastisch federnd gelagert sein.

Gemäß einer bevorzugten Ausführungsform der Erfindung verläuft eine der beiden Ebenen, in der das mindestens eine Halteelement elastisch federnd ausgebildet ist, parallel zu der Auflagefläche des Trägerelements bzw. einer Flächenerstreckung des Rahmens. Die andere der beiden Ebenen, in der das mindestens eine Halteelement ebenfalls elastisch federnd ist, verläuft dann vorzugsweise senkrecht zu der Auflagefläche des Trägerelements bzw. der Flächenerstreckung des Rahmens.

Die elastisch federnden Eigenschaften des mindestens einen Halteelements können sich aufgrund der Materialeigenschaften und/oder der Form des mindestens einen Halteelements ergeben. Denkbar wäre bspw., dass das mindestens eine Halteelement gezielte Materialverjüngungen aufweist, welche dem Halteelement die elastisch federnden Eigenschaften verleihen. Bevorzugt ist es, wenn das mindestens eine elastisch federnde Halteelement derart geformt ist, dass es aufgrund seiner Form und/oder Geometrie die federnde Wirkung aufweist. Die Form bzw. Geometrie des mindestens einen Halteelements ist dabei vorzugsweise so gewählt, dass das Halteelement die elastisch federnden Eigenschaften auch ohne besondere Materialverjüngungen aufweist.

Gemäß einer besonders vorteilhaften Weiterbildung der Erfindung wird vorgeschlagen, dass das mindestens eine elastisch federnde Halteelement einen Falz aufweist, der sowohl ein Komprimieren und Dehnen in der xy-Ebene als auch eine Parallelverschiebung der distalen Enden des Falz bzw. des Halteelements in der z-Richtung ermöglicht. Insbesondere wird vorgeschlagen, dass das mindestens eine Halteelement in einem senkrecht zu der Auflagefläche des Trägerelements bzw. der Flächenerstreckung des Rahmens und durch eine imaginäre Verbindungslinie zwischen dem Rahmen und dem Trägerelement verlaufenden Querschnitt betrachtet mindestens einen ersten Abschnitt, der eine Erstreckungskomponente in eine erste Richtung senkrecht zur Auflagefläche des Trägerelements bzw. zu der Flächenerstreckung des Rahmens hat, und mindestens einen an dem ersten Abschnitt befestigten zweiten Abschnitt aufweist, der eine Erstreckungskomponente in eine zweite Richtung senkrecht zur Auflagefläche des Trägerelements bzw. zu der Flächenerstreckung des Rahmens hat, die entgegengesetzt zur ersten Richtung verläuft, wobei die beiden Abschnitte jeweils auch eine Erstreckungskomponente parallel zur Auflagefläche des Trägerelements bzw. zu der Flächenerstreckung des Rahmens haben. Das mindestens eine Halteelement weist somit einen sog. Leporello- oder Zickzackfalz auf und ähnelt in seiner Form einer Ziehharmonika. Der Falz kann auch als eine Stufenfalzung ausgebildet sein, die einem Leporello- oder Zickzackfalz entspricht, dessen Stufenbreite sich zu einem distalen Ende hin verjüngt.

Konstruktiv gesehen, ist es vorteilhaft, wenn das mindestens eine elastisch federnde Halteelement auf einer zu einem geometrischen Schwerpunkt des Rahmens nach innen gerichteten Innenseite des Rahmens angeordnet ist. In diesem Fall ist das Trägerelement vorzugsweise innerhalb des Rahmens angeordnet, so dass das mindestens eine Halteelement das Trägerelement innerhalb des Rahmens elastisch federnd hält.

Es ist denkbar, dass lediglich ein elastisch federndes Halteelement zwischen dem Rahmen und dem Trägerelement angeordnet ist. Die anderen Halteelemente, welche das Trägerelement relativ zu dem Rahmen halten, können starr ausgebildet sein. Dadurch kann eine geringe elastisch federnde Relativbewegung zwischen dem Trägerelement und dem Rahmen ermöglicht werden, die jedoch für bestimmte Anwendungen durchaus ausreichend sein kann. Vorzugsweise weist der Rahmen jedoch mehrere elastisch federnde Halteelemente auf. Dadurch ist eine größere Relativbewegung zwischen dem Trägerelement und dem Rahmen möglich.

Besonders bevorzugt ist es, wenn der Rahmen auf mindestens zwei gegenüberliegenden Innenseiten des Rahmens elastisch federnde Halteelemente aufweist. Vorzugsweise weist der Rahmen auf drei Innenseiten elastisch federnde Halteelemente auf. Ferner wird vorgeschlagen, dass der Rahmen jeweils mindestens zwei elastisch federnde Halteelemente je mit mindestens einem elastisch federnden Halteelement versehener Innenseite aufweist.

Die Form des Rahmens ist abhängig von der Form des Kombiinstruments, für das der Rahmen mit der Leiterplatte zum Einbau bestimmt ist. Üblicherweise erstrecken sich Kombiinstrumente im Armaturenbrett hinter dem Lenkrad mit einer Längserstreckung in Querrichtung, wobei mehrere Anzeigeeinrichtungen und/oder Bildschirme nebeneinander angeordnet sind. In diesem Sinne wird vorgeschlagen, dass der Rahmen eine rechteckige Form aufweist. Der Rahmen und das Trägerelement können auch geringfügig gewölbt ausgebildet sein, so dass der Rahmen mit der Leiterplatte in ein Kombiinstrument eingebaut werden kann, dessen Anzeigeeinrichtungen und/oder Bildschirme um den Fahrer des Kraftfahrzeugs herum gebogen und zu ihm ausgerichtet sind.

Der Rahmen, das Trägerelement und das mindestens eine Halteelement bestehen vorzugsweise aus dem gleichen Material, insbesondere einem Kunststoffmaterial. Sie können bspw. mittels eines Spritzgussverfahrens hergestellt werden. Denkbar wäre jedoch auch, dass der Rahmen, das Trägerelement und/oder das mindestens eine Halteelement aus unterschiedlichen Materialien bestehen, die mittels eines Co-Moulding-Verfahrens hergestellt werden können.

Weitere Merkmale und Vorteile der vorliegenden Erfindung werden nachfolgend anhand der Figuren näher erläutert. Es zeigen:
- Figur 1: einen erfindungsgemäßen Rahmen, der zum Einbau in einem Gehäuse eines erfindungsgemäßen Kombiinstruments vorgesehen ist, in Draufsicht;
- Figur 2: einen Ausschnitt II aus Figur 1 mit einem seitlich angeordneten Halteelement in perspektivischer Ansicht;
- Figur 3: einen Ausschnitt III aus Figur 1 mit zwei unten angeordneten Halteelementen in perspektivischer Ansicht;
- Figur 4: den Rahmen aus Figur 1 mit einem schematisch gezeigten Gehäuse eines Kombiinstruments, in perspektivischer Ansicht;
- Figur 5: einen aus dem Stand der Technik bekannten Rahmen mit daran befestigter Leiterplatte zum Einbau in ein Gehäuse eines Kombiinstruments;
- Figur 6a: eine erste Ausgestaltung eines Halteelements in einem Querschnitt betrachtet; und
- Figur 6b: eine zweite Ausgestaltung eines Halteelements in einem Querschnitt betrachtet.

Kombiinstrumente sind zur Montage im Inneren eines Kraftfahrzeugs im Sichtbereich des Fahrers im Armaturenbrett vorgesehen. Die Kombiinstrumente umfassen mindestens eine analoge oder digitale Anzeigeeinrichtung zur Anzeige von betriebs- und/oder verkehrsbezogenen Informationen betreffend das Kraftfahrzeug bzw. sein Umfeld. Ferner kann das Kombiinstrument mehrere neben- oder übereinander angeordnete Kontrollleuchten umfassen. Derartige Kombiinstrumente sind in unterschiedlichen Ausführungsformen aus dem Stand der Technik bekannt. Während früher hauptsächlich analoge Anzeigeeinrichtungen mit einem elektrischen Zeigerinstrument Verwendung fanden, das mindestens einen durch einen Elektromotor angetriebenen Zeiger umfasst, werden in neuerer Zeit zunehmend digitale Anzeigeeinrichtungen eingesetzt, die mindestens einen Bildschirm aufweisen, auf dem ein Bild eines analogen Zeigerinstruments und/oder eine digitale Anzeige darstellbar ist.

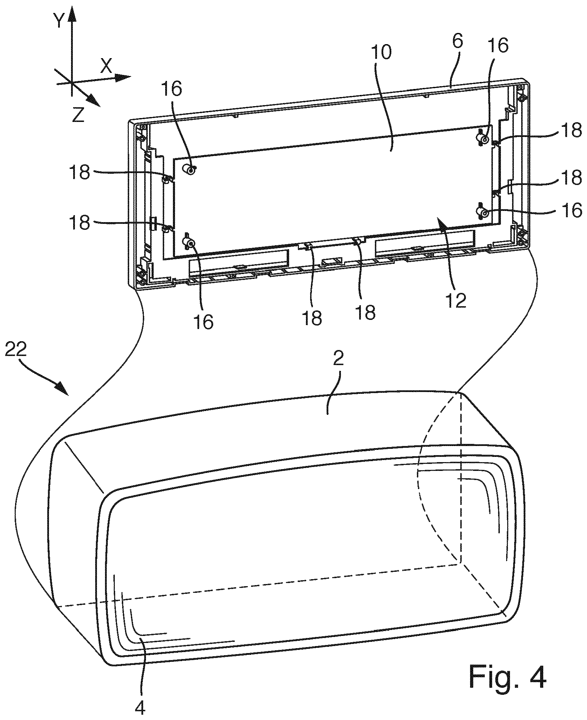

Kombiinstrumente 22 umfassen üblicherweise ein Gehäuse 2 aus Kunststoff (vgl. Figur 4), das eines oder mehrere unterschiedlich große Öffnungen und Sichtfenster aufweist, in denen Anzeigen (z.B. Geschwindigkeitsanzeige, Drehzahlanzeige, Kraftstofffüllstandsanzeige, Motortemperaturanzeige, Ladedruckanzeige, etc.) in Form von analogen oder digitalen Anzeigeeirichtungen sowie verschiedene Kontrollleuchten (z.B. für den Zustand der Beleuchtungseinrichtung, für den Zustand des Motors, für den Zustand des Fahrwerks, für den Zustand der Karosserie, etc.) oder Bildschirme (z.B. für Navigation, als virtuelle Anzeigen, als virtuelle Kontrollleuchten, etc.) angeordnet sein können. Die Öffnungen und/oder Sichtfenster des Gehäuses 2 sind durch eine oder mehrere transparente Abdeckscheiben 4 aus Glas oder Kunststoff verschlossen, um die Anzeigen, Kontrollleuchten oder Bildschirme vor mechanischen Einflüssen, Schmutz, Staub und Feuchtigkeit zu schützen. In das Gehäuse 2 des Kombiinstruments 22 wird ein Rahmen 6 mit einer daran befestigten Leiterplatte 8 eingesetzt.

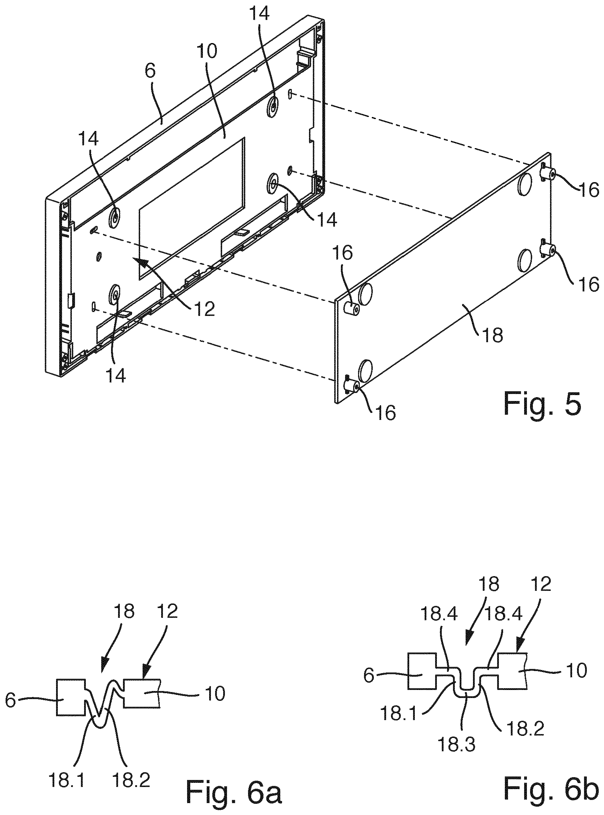

Im Stand der Technik weist der Rahmen 6 ein damit starr verbundenes Trägerelement 10 auf, das eine Auflagefläche 12 definiert, auf der die Leiterplatte 8 mittels Schrauben 16 oder anderer Befestigungselemente befestigt ist (vgl. Figur 5). Zwischen der Leiterplatte 8 und dem Trägerelement 10 sind mehrere separate elastisch federnde Dämpfungselemente 14, bspw. in Form Gummi- oder Kunststoffringen, vorgesehen, An der Leiterplatte 8 sind Kontrollleuchten, Bildschirme und/oder Elektromotoren zum Verstellen der Zeiger von analogen Anzeigeeirichtungen elektrisch kontaktiert. Die Dämpfungselemente 14 zur federnd elastischen Lagerung der Leiterplatte 8 bezüglich des Rahmens 6 dienen dazu, Vibrationen der Karosserie von den empfindlichen elektrischen Bauteilen fernzuhalten und um Fertigungstoleranzen auszugleichen, damit die an der Leiterplatte 8 befestigten Kontrollleuchten, analogen oder digitalen Anzeigeeinrichtungen und/oder Bildschirme an den dafür vorgesehenen Positionen (z.B. in die Öffnungen im Bereich der Sichtfenster des Gehäuses 2) im Kombiinstrument 22 ohne größere Spannungen montiert werden können.

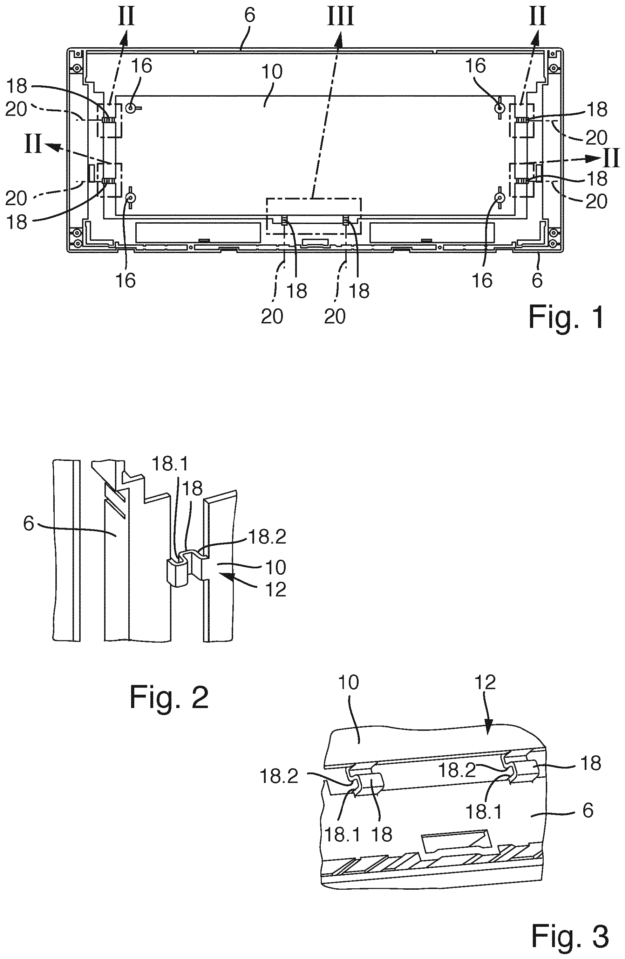

Um die Montage der Leiterplatte 8 an dem Rahmen 6 bzw. des gesamten Kombiinstruments 22 zu vereinfachen und kostengünstiger und zuverlässiger zu gestalten, wird vorgeschlagen, dass der Rahmen 6 ein damit einteilig ausgebildetes Trägerelement 10 zur Befestigung der Leiterplatte 8 und mindestens ein mit dem Rahmen 6 einteilig ausgebildetes in mindestens einer Ebene elastisch federndes Halteelement 18 aufweist, welches den Rahmen 6 und das Trägerelement 10 miteinander verbindet (vgl. Figuren 1 bis 4).

Somit sind die Halteelemente 18 integraler Bestandteil des Rahmens 6. Die Halteelemente 18 verbinden den Rahmen 6 mit dem Trägerelement 10, das zur Befestigung der Leiterplatte 8 vorgesehen ist. Das Trägerelement 10 definiert über mindestens drei Auflagepunkte eine Auflagefläche 12, auf der die Leiterplatte 8 befestigt wird. Die Befestigung der Leiterplatte 8 an dem Trägerelement 10 kann mittels Schrauben 16, Kleben, einer Rastverbindung oder auf sonstige Weise erfolgen. Die Leiterplatte 8 ist vorzugsweise starr an dem Trägerelement 10 befestigt. Die Halteelemente 18 sind in mindestens einer Ebene elastisch federnd ausgestaltet.

Die Ebene kann parallel zur der Auflagefläche 12 des Trägerelements 10 oder senkrecht oder schräg dazu verlaufen.

Dank der elastisch federnden Halteelemente 18 ist das Trägerelement 10 und mit ihm die Leiterplatte 8 bezüglich des Rahmens 6 in mindestens einer Ebene federnd elastisch gelagert. Dadurch können Vibrationen der Karosserie von den empfindlichen elektrischen Bauteilen, die auf der Leiterplatte 8 befestigt und/oder elektrisch kontaktiert sind, ferngehalten und Fertigungstoleranzen ausgeglichen werden, damit die an der Leiterplatte 8 befestigten Kontrollleuchten, analogen oder digitalen Anzeigeeinrichtungen und/oder Bildschirme an den dafür vorgesehenen Positionen (z.B. in Öffnungen im Bereich von Sichtfenstern eines Kombiinstruments 22) ohne größere Spannungen in dem Gehäuse 2 des Kombiinstruments 22 montiert werden können.

Die mindestens eine Ebene, in der das mindestens eine Halteelement 18 elastisch federnd ausgebildet ist, verläuft vorzugsweise parallel zu einer Flächenerstreckung des Rahmens 6 bzw. zu der Auflagefläche 12 des Trägerelements 10. Auf diese Weise kann die Leiterplatte 8 bezüglich des Rahmens 6 in einer xy-Ebene (vgl. Figur 4) elastisch federn. Dies entspricht bei einem Blick des Fahrers auf das im Kraftfahrzeug montierte Kombiinstrument 22 einer Bewegung nach rechts/links und oben/unten.

Alternativ oder zusätzlich kann die mindestens eine Ebene, in der das mindestens eine Halteelement 18 elastisch federnd ausgestaltet ist, senkrecht zu der Flächenerstreckung des Rahmens 6 bzw. der Auflagefläche 12 des Trägerelements 10 verlaufen. Vorzugsweise ist das mindestens eine Halteelement 18 in zwei Ebenen (xy-Ebene und yz-Ebene), die senkrecht zueinander verlaufen, elastisch federnd ausgebildet. Auf diese Weise kann die Leiterplatte 8 bezüglich des Rahmens 6 auch in einer z-Richtung senkrecht zur xy-Ebene elastisch federn. Dies entspricht bei einem Blick auf das im Kraftfahrzeug montierte Kombiinstrument 22 einer Bewegung auf den Fahrer zu oder von ihm weg. Mit einer dementsprechenden Ausgestaltung der Halteelemente 18 ist die Leiterplatte 18 somit im dreidimensionalen Raum elastisch federnd gelagert.

Die elastisch federnden Eigenschaften des mindestens einen Halteelements 18 können sich aufgrund der Materialeigenschaften und/oder der Form des mindestens einen Halteelements 18 ergeben. Denkbar wäre bspw., dass das mindestens eine Halteelement 18 aus einem federnd elastischen Material (z.B. ein Elastomer, ein gummielastisches Polymer oder Gummi) besteht und/oder gezielte Materialverjüngungen aufweist, welche dem Halteelement 18 die elastisch federnden Eigenschaften verleihen. Bevorzugt ist es, wenn das mindestens eine elastisch federnde Halteelement 18 derart geformt ist, dass es aufgrund seiner Form und/oder Geometrie die federnde Wirkung aufweist. Die Form bzw. Geometrie des mindestens einen Halteelements 18 ist dabei vorzugsweise so gewählt, dass das Halteelement 18 die elastisch federnden Eigenschaften aufweist auch ohne, dass es aus einem federnd elastischen Material besteht und ohne dass es besondere Materialverjüngungen aufweist. Selbstverständlich wäre es jedoch denkbar, dass das mindestens eine Halteelement 18 die elastisch federnde Form und ein federnd elastisches Material und/oder besondere Materialverjüngungen aufweist.

Bevorzugt weist das mindestens eine elastisch federnde Halteelement 18 einen Falz auf, der sowohl ein Komprimieren und Dehnen der distalen Enden in der x-Richtung oder der y-Richtung als auch eine Parallelverschiebung der distalen Enden des Falz bzw. des Halteelements 18 in der z-Richtung ermöglicht. Insbesondere wird vorgeschlagen, dass das mindestens eine Halteelement 18 in einem senkrecht zu der Auflagefläche 12 des Trägerelements 10 bzw. der Flächenerstreckung des Rahmens 6 und durch eine imaginäre Verbindungslinie zwischen dem Rahmen 6 und dem Trägerelement 10 verlaufenden Querschnitt 20 (vgl. Figur 1) betrachtet mindestens einen ersten Abschnitt 18.1, der eine Erstreckungskomponente in eine erste Richtung senkrecht zur Auflagefläche 12 des Trägerelements 10 bzw. zu der Flächenerstreckung des Rahmens 6 hat, und mindestens einen an dem ersten Abschnitt 18.1 befestigten zweiten Abschnitt 18.2 aufweist, der eine Erstreckungskomponente in eine zweite Richtung senkrecht zur Auflagefläche 12 des Trägerelements 10 bzw. zu der Flächenerstreckung des Rahmens 6 hat, die entgegengesetzt zur ersten Richtung verläuft. Die beiden Abschnitte 18.1, 18.2 haben jeweils auch eine Erstreckungskomponente parallel zur Auflagefläche 12 des Trägerelements 10 bzw. zu der Flächenerstreckung des Rahmens 6. Das mindestens eine Halteelement 18 weist somit einen sog. Leporello- oder Zickzackfalz auf und ähnelt in seiner Form einer Ziehharmonika (vgl. Figur 6a). Der Falz kann auch als eine Stufenfalzung ausgebildet sein, die einem Leporello- oder Zickzackfalz entspricht, dessen Stufenbreite sich zu einem distalen Ende hin verjüngt. Die Erstreckungskomponente der beiden Abschnitte 18.1, 18.2 parallel zur Auflagefläche 12 des Trägerelements 10 kann auch als ein Verbindungsabschnitt 18.3, 18.4 ausgebildet sein, welcher die beiden Abschnitte 18.1, 18.2 miteinander verbindet oder über den die Abschnitte 18.1 oder 18.2 des Halteelements 18 mit dem Rahmen 6 oder dem Trägerelement 10 verbunden sind (vgl. Figur 6b). Die Figuren 6a und 6b zeigen jeweils ein Beispiel für ein Halteelement 18 im Querschnitt 20. Viele andere Ausgestaltungen des Halteelements 18 sind jedoch auch denkbar.

Konstruktiv gesehen, ist es vorteilhaft, wenn das mindestens eine elastisch federnde Halteelement 18 auf einer zu einem geometrischen Schwerpunkt des Rahmens 6 nach innen gerichteten Innenseite des Rahmens 6 angeordnet ist. In diesem Fall ist das Trägerelement 10 innerhalb des Rahmens 6 angeordnet, so dass das Trägerelement 10 von dem Rahmen 6 umgeben ist und das mindestens eine Halteelement 18 das Trägerelement 10 innerhalb des Rahmens 6 elastisch federnd hält.

Es ist denkbar, dass lediglich ein elastisch federndes Halteelement 18 zwischen dem Rahmen 6 und dem Trägerelement 10 angeordnet ist. Die anderen Halteelemente, welche das Trägerelement 10 relativ zu dem Rahmen 6 halten, können starr ausgebildet sein. Dadurch kann eine geringe elastisch federnde Relativbewegung zwischen dem Trägerelement 10 und dem Rahmen 6 ermöglicht werden, die jedoch für bestimmte Anwendungen durchaus ausreichend sein kann. Vorzugsweise weist der Rahmen 6 jedoch mehrere elastisch federnde Halteelemente 18 auf. Dadurch ist eine größere Relativbewegung zwischen dem Trägerelement 10 und dem Rahmen 6 möglich.

Besonders bevorzugt ist es, wenn der Rahmen 6 auf mindestens zwei gegenüberliegenden Innenseiten des Rahmens 6 elastisch federnde Halteelemente 18 aufweist. Vorzugsweise weist der Rahmen 6 auf drei Innenseiten elastisch federnde Halteelemente 18 auf (vgl. Figur 1). Ferner wird vorgeschlagen, dass der Rahmen 6 jeweils mindestens zwei elastisch federnde Halteelemente 18 je mit mindestens einem elastisch federnden Halteelement 18 versehener Innenseite aufweist. In dem Beispiel der Figur 1 weist der Rahmen 6 zwei zueinander beabstandete Halteelemente 18 auf der linken Seite, zwei auf der rechten Seite und zwei an der Unterseite auf.

Die Form des Rahmens 6 und damit auch des Trägerelements 10 ist abhängig von der Form des Gehäuses 2 des Kombiinstruments 22, für das der Rahmen 6 mit der Leiterplatte 8 zum Einbau bestimmt ist. Üblicherweise erstrecken sich Kombiinstrumente 22 im Armaturenbrett hinter dem Lenkrad mit einer Längserstreckung in Querrichtung, wobei mehrere Anzeigeeinrichtungen und/oder Bildschirme nebeneinander angeordnet sind. In diesem Sinne wird vorgeschlagen, dass der Rahmen 6 eine zumindest annähernd rechteckige Form aufweist. "Zumindest annähernd" bedeutet in diesem Zusammenhang, dass die Ecken des Rechtecks abgerundet und/oder die Seitenwände des Rechtecks unterschiedlich lang sein können und/oder mindestens eine der Seitenwände nach innen oder außen gebogen sein kann. Der Rahmen 6 und das Trägerelement 10 können auch geringfügig (aus der Zeichenebene der Figur 1 heraus) gewölbt ausgebildet sein, so dass der Rahmen 6 mit der Leiterplatte 8 in ein Gehäuse 2 eines Kombiinstruments 22 eingebaut werden kann, dessen Anzeigeeinrichtungen und/oder Bildschirme um den Fahrer des Kraftfahrzeugs herum gebogen und zu ihm ausgerichtet sind.

Der Rahmen 6, das Trägerelement 10 und das mindestens eine Halteelement 18 bestehen vorzugsweise aus dem gleichen Material, insbesondere einem Kunststoffmaterial. Sie können bspw. mittels eines Spritzgussverfahrens gemeinsam in einem Schritt hergestellt werden. Denkbar wäre jedoch auch, dass der Rahmen 6, das Trägerelement 10 und/oder das mindestens eine Halteelement 18 aus unterschiedlichen Materialien bestehen, die mittels eines Co-Moulding-Verfahrens hergestellt werden können.

## Patentansprüche

1. Rahmen (6) eines Kombiinstruments (22) eines Kraftfahrzeugs, das Kombiinstrument (22) umfassend den Rahmen (6) und eine daran elastisch befestigte elektrische Leiterplatte (8) zur elektrischen Kontaktierung einer Leuchte, eines Bildschirms und/oder eines Elektromotors, **dadurch gekennzeichnet, dass** der Rahmen (6) ein damit einteilig ausgebildetes Trägerelement (10) zur Befestigung der Leiterplatte (8) und mindestens ein mit dem Rahmen (6) einteilig ausgebildetes in mindestens einer Ebene elastisch federndes Halteelement (18) aufweist, welches den Rahmen (6) und das Trägerelement (10) miteinander verbindet.

2. Rahmen (6) nach Anspruch 1, **dadurch gekennzeichnet, dass** die mindestens eine Ebene, in der das mindestens eine Halteelement (18) elastisch federnd ist, parallel zu einer Flächenerstreckung des Rahmens (6) verläuft.

3. Rahmen (6) nach Anspruch 1, **dadurch gekennzeichnet, dass** die mindestens eine Ebene, in der das mindestens eine Halteelement (18) elastisch federnd ist, senkrecht zu einer Flächenerstreckung des Rahmens (6) verläuft.

4. Rahmen (6) nach Anspruch 1, **dadurch gekennzeichnet, dass** das mindestens eine Halteelement (18) in zwei Ebenen, die senkrecht zueinander verlaufen, elastisch federnd ausgebildet ist.

5. Rahmen (6) nach Anspruch 4, **dadurch gekennzeichnet, dass** eine der beiden Ebenen, in der das mindestens eine Halteelement (18) elastisch federnd ist, parallel zu einer Flächenerstreckung des Rahmens (6) verläuft, und dass die andere der beiden Ebenen, in der das mindestens eine Halteelement (18) ebenfalls elastisch federnd ist, senkrecht zu der Flächenerstreckung des Rahmens (6) verläuft.

6. Rahmen (6) nach einem der Ansprüche 1 bis 5, **dadurch gekennzeichnet, dass** das mindestens eine elastisch federnde Halteelement (18) derart geformt ist, dass es aufgrund seiner Form und/oder Geometrie die federnde Wirkung aufweist.

7. Rahmen (6) nach Anspruch 6, **dadurch gekennzeichnet, dass** das mindestens eine elastisch federnde Halteelement (18) in einem senkrecht zu der Flächenerstreckung des Rahmens (6) und durch eine imaginäre Verbindungslinie zwischen dem Rahmen (6) und dem Trägerelement (10) verlaufenden Querschnitt (20) betrachtet mindestens einen ersten Abschnitt (18.1), der eine Erstreckungskomponente in eine erste Richtung senkrecht zur Flächenerstreckung des Rahmens (6) hat, und mindestens einen an dem ersten Abschnitt (18.1) befestigten zweiten Abschnitt (18.2) aufweist, der eine Erstreckungskomponente in eine zweite Richtung senkrecht zur Flächenerstreckung des Rahmens (6) hat, die entgegengesetzt zur ersten Richtung verläuft, wobei die beiden Abschnitte (18.1, 18.2) jeweils auch eine Erstreckungskomponente parallel zur Flächenerstreckung des Rahmens (6) haben.

8. Rahmen (6) nach einem der Ansprüche 1 bis 7, **dadurch gekennzeichnet, dass** das mindestens eine elastisch federnde Halteelement (18) auf einer zu einem geometrischen Schwerpunkt des Rahmens (6) nach innen gerichteten Innenseite des Rahmens (6) angeordnet ist.

9. Rahmen (6) nach einem der Ansprüche 1 bis 8, **dadurch gekennzeichnet, dass** der Rahmen (6) mehrere elastisch federnde Halteelemente (18) aufweist.

10. Rahmen (6) nach Anspruch 8 und 9, **dadurch gekennzeichnet, dass** der Rahmen (6) auf mindestens zwei gegenüberliegenden Innenseiten des Rahmens (6) elastisch federnde Halteelemente (18) aufweist.

11. Rahmen (6) nach Anspruch 10, **dadurch gekennzeichnet, dass** der Rahmen (6) auf drei Innenseiten elastisch federnde Halteelemente (18) aufweist.

12. Rahmen (6) nach Anspruch 10 oder 11, **dadurch gekennzeichnet, dass** der Rahmen (6) jeweils mindestens zwei elastisch federnde Halteelemente (18) je mit mindestens einem elastisch federnden Halteelement (18) versehener Innenseite aufweist.

13. Rahmen (6) nach einem der Ansprüche 1 bis 12, **dadurch gekennzeichnet, dass** der Rahmen (6) eine rechteckige Form aufweist.

14. Rahmen (6) nach einem der Ansprüche 1 bis 13, **dadurch gekennzeichnet, dass** der Rahmen (6), das Trägerelement (10) und das mindestens eine Halteelement (18) aus einem Kunststoff, vorzugsweise nach einem Spritzgussverfahren, gefertigt ist.

15. Kombiinstrument (22) für ein Kraftfahrzeug, umfassend einen Rahmen (6) und eine daran elastisch befestigte elektrische Leiterplatte (8) zur elektrischen Kontaktierung einer Leuchte, eines Bildschirms und/oder eines Elektromotors, **dadurch gekennzeichnet, dass** der Rahmen (6) nach einem der Ansprüche 1 bis 14 ausgebildet ist.

## Claims

1. Frame (6) of an instrument cluster (22) of a motor vehicle, the instrument cluster (22) comprising the frame (6) and an electrical printed circuit board (8), which is elastically fastened thereto, for making electrical contact with a light, a screen and/or an electric motor, **characterized in that** the frame (6) comprises a support element (10), which is formed integrally therewith, for fastening the printed circuit board (8), and at least one retaining element (18), which is formed integrally with the frame (6), is elastically resilient in at least one plane and connects the frame (6) and the support element (10) to one another.

2. Frame (6) according to claim 1, **characterized in that** the at least one plane in which the at least one retaining element (18) is elastically resilient runs parallel to a surface extension of the frame (6).

3. Frame (6) according to claim 1, **characterized in that** the at least one plane in which the at least one retaining element (18) is elastically resilient runs perpendicular to a surface extension of the frame (6).

4. Frame (6) according to claim 1, **characterized in that** the at least one retaining element (18) is elastically resilient in two planes which run perpendicular to one another.

5. Frame (6) according to claim 4, **characterized in that** one of the two planes in which the at least one retaining element (18) is elastically resilient runs parallel to a surface extension of the frame (6), and **in that** the other of the two planes in which the at least one retaining element (18) is also elastically resilient runs perpendicular to the surface extension of the frame (6).

6. Frame (6) according to any one of claims 1 to 5, **characterized in that** the at least one elastically resilient retaining element (18) is shaped in such a way that it has the resilient effect due to its shape and/or geometry.

7. Frame (6) according to claim 6, **characterized in that** the at least one elastically resilient retaining element (18), as viewed in a cross-section (20) extending perpendicularly to the surface extension of the frame (6) and through an imaginary connecting line between the frame (6) and the carrier element (10), comprises at least one first section (18. 1) having an extension component in a first direction perpendicular to the surface extension of the frame (6), and at least one second section (18.2) attached to the first section (18.1) and having an extension component in a second direction perpendicular to the surface extension of the frame (6) and opposite to the first direction, wherein the two sections (18.1, 18.2) each also have an extension component parallel to the surface extension of the frame (6).

8. Frame (6) according to one of claims 1 to 7, **characterized in that** the at least one elastically resilient retaining element (18) is arranged on an inner side of the frame (6) directed inwardly towards a geometric center of gravity of the frame (6).

9. Frame (6) according to any one of claims 1 to 8, **characterized in that** the frame (6) comprises a plurality of elastically resilient retaining elements (18).

10. Frame (6) according to claims 8 and 9, **characterized in that** the frame (6) comprises elastically resilient retaining elements (18) on at least two opposite inner sides of the frame (6).

11. Frame (6) according to claim 10, **characterized in that** the frame (6) comprises elastically resilient retaining elements (18) on three inner sides.

12. Frame (6) according to claim 10 or 11, **characterized in that** the frame (6) comprises at least two elastically resilient retaining elements (18) per each inner side provided with at least one elastically resilient retaining element (18).

13. Frame (6) according to one of claims 1 to 12, **characterized in that** the frame (6) has a rectangular shape.

14. Frame (6) according to one of claims 1 to 13, **characterized in that** the frame (6), the support element (10) and the at least one retaining element (18) are made of a plastic material, preferably according to an injection molding process.

15. Instrument cluster (22) for a motor vehicle, comprising a frame (6) and an electrical printed circuit board (8), which is elastically fastened thereto, for making electrical contact with a light, a screen and/or an electric motor, **characterized in that** the frame (6) is designed according to one of the claims 1 to 14.

## Revendications

1. Cadre (6) d'un combiné d'instruments (22) d'un véhicule automobile, le combiné d'instruments (22) comprenant le cadre (6) et une carte de circuit imprimé électrique (8), qui y est fixée de manière élastique, pour établir un contact électrique avec une lumière, un écran et/ou un moteur électrique, **caractérisé en ce que en ce que** le cadre (6) présente un élément de support (10) formé d'un seul tenant avec lui pour la fixation de la carte de circuit imprimé (8) et au moins un élément de retenue (18) formé d'un seul tenant avec le cadre (6), élastiquement résilient dans au moins un plan, qui relie entre eux le cadre (6) et l'élément de support (10).

2. Cadre (6) selon la revendication 1, **caractérisé en ce que** le au moins un plan dans lequel le au moins un élément de retenue (18) est élastiquement résilient s'étend parallèlement à une extension de surface du cadre (6).

3. Cadre (6) selon la revendication 1, **caractérisé en ce que** le au moins un plan dans lequel le au moins un élément de retenue (18) est élastiquement résilient s'étend perpendiculairement à une extension de surface du cadre (6).

4. Cadre (6) selon la revendication 1, **caractérisé en ce que** l'au moins un élément de retenue (18) est élastiquement résilient dans deux plans qui s'étendent perpendiculairement l'un à l'autre.

5. Cadre (6) selon la revendication 4, **caractérisé en ce que** l'un des deux plans dans lesquels le au moins un élément de retenue (18) est élastiquement résilient s'étend parallèlement à une extension de surface du cadre (6), et **en ce que** l'autre des deux plans dans lesquels le au moins un élément de retenue (18) est également élastiquement résilient s'étend perpendiculairement à l'extension de surface du cadre (6).

6. Cadre (6) selon l'une quelconque des revendications 1 à 5, **caractérisé en ce que** l'au moins un élément de retenue (18) élastiquement résilient est formé de telle sorte qu'il présente l'effet résilient du fait de sa forme et/ou de sa géométrie.

7. Cadre (6) selon la revendication 6, **caractérisé en ce que** le au moins un élément de retenue élastiquement résilient (18), vu dans une section transversale (20) s'étendant perpendiculairement à l'extension de surface du cadre (6) et à travers une ligne de connexion imaginaire entre le cadre (6) et l'élément de support (10), a au moins une première section (18. 1) ayant une composante d'extension dans une première direction perpendiculaire à l'extension de surface du cadre (6), et au moins une seconde section (18.2) fixée à la première section (18.1) et ayant une composante d'extension dans une seconde direction perpendiculaire à l'extension de surface du cadre (6) et opposée à la première direction, dans laquelle les deux sections (18.1, 18.2) ont chacune également une composante d'extension parallèle à l'extension de surface du cadre (6).

8. Cadre (6) selon l'une des revendications 1 à 7, **caractérisé en ce que** le au moins un élément de retenue élastiquement résilient (18) est disposé sur un côté intérieur du cadre (6) dirigé vers l'intérieur en direction d'un centre de gravité géométrique du cadre (6).

9. Cadre (6) selon l'une quelconque des revendications 1 à 8, **caractérisé en ce que** le cadre (6) comporte une pluralité d'éléments de retenue (18) élastiquement résilients.

10. Cadre (6) selon les revendications 8 et 9, **caractérisé en ce que** le cadre (6) comporte des éléments de retenue élastiquement résilients (18) sur au moins deux côtés intérieurs opposés du cadre (6).

11. Cadre (6) selon la revendication 10, **caractérisé en ce que** le cadre (6) comporte des éléments de retenue élastiquement résilients (18) sur trois côtés intérieurs.

12. Cadre (6) selon la revendication 10 ou 11, **caractérisé en ce que** le cadre (6) comporte au moins deux éléments de retenue élastiquement résilients (18) pour chaque côté intérieur muni d'au moins un élément de retenue élastiquement résiliant (18).

13. Cadre (6) selon l'une des revendications 1 à 12, **caractérisé en ce que** le cadre (6) a une forme rectangulaire.

14. Cadre (6) selon l'une quelconque des revendications 1 à 13, **caractérisé en ce que** le cadre (6), l'élément de support (10) et le au moins un élément de retenue (18) sont réalisés en matière plastique, de préférence selon un procédé de moulage par injection.

15. Combiné d'instruments (22) pour un véhicule automobile, comprenant un cadre (6) et une carte de circuit imprimé électrique (8) fixée élastiquement sur celui-ci, pour la mise en contact électrique avec une lumière, un écran et/ou un moteur électrique, **caractérisé en ce que** le cadre (6) est conçu selon l'une des revendications 1 à 14.
